# EUROPÄISCHE PATENTSCHRIFT

(11) **EP 2 108 085 B1**
(45) Veröffentlichungstag und Bekanntmachung des Hinweises auf die Patenterteilung: **18.05.2011**
(21) Anmeldenummer: 07857458.9
(22) Anmeldetag: 12.12.2007
(51) Int. Cl.: F16C 41/00, G01P 3/44, G01P 3/488

(54) **SENSORVORRICHTUNG ZUR MESSUNGEN VON DREHBEWEGUNGEN EINES RADLAGERS**
SENSOR DEVICE FOR MEASURING ROTATIONAL MOVEMENTS OF A WHEEL BEARING
DISPOSITIF DE DÉTECTION POUR MESURER DES MOUVEMENTS DE ROTATION D'UN ROULEMENT DE ROUE

(30) Priorität: 04.01.2007 DE 102007001118
(43) Veröffentlichungstag der Anmeldung: 14.10.2009
(73) Patentinhaber: Robert Bosch GmbH, 70442 Stuttgart (DE)
(72) Erfinder: EHRHARDT, Uwe, 73760 Ostfildern (DE); KIENZLE, Markus, 74251 Lehrensteinsfeld (DE); WAIBLER, Matthias, 73630 Remshalden-Hebsack (DE); GUSE, Peter, 70437 Stuttgart (DE)
(86) Internationale Anmeldenummer: PCT/EP2007/063795
(87) Internationale Veröffentlichungsnummer: WO 2008/080783

(56) Entgegenhaltungen:
- DE-A1- 2 044 211
- GB-A- 1 604 861
- JP-A- 2006 266 962
- US-A- 4 069 435

## Beschreibung

Die Erfindung geht aus von einer Sensorvorrichtung zur Messungen von Drehbewegungen eines Radlagers nach der Gattung des unabhängigen Anspruchs. Aus der DE 20 2005 005 260 U1 ist bereits eine Vorrichtung zur Messung von Drehbewegungen eines Radlagers bekannt. Diese weist einen Signalgeber an einem rotierenden Teil des Lagers auf mit einer ortsfesten Sensorbaugruppe mit einem Haltering und einem kappenförmigen Kunststoffteil als Abdeckung des Lagers. Der das kappenförmige Kunststoffteil tragende Haltering ist unter Einfügung einer Dichtung mit dem ortsfesten Teil des Radlagers verpresst.

Aus der DE 102 26 091 A1 ist weiterhin ein nichtmetallischer Encoder für ein in einem Lager angeordnetes, aktives System zum Erfassen von Raddrehzahlen bekannt. In dem nichtmetallischen Körper sind magnetisierte eisenhaltige Partikel eingebettet. Der Encoder ist radial zwischen inneren und äußeren Laufringen eines Radlagers und axial zwischen einem beabstandeten Paar von Laufrollen des Lagers angebracht.

Bei beiden Vorrichtungen sind jedoch Kugellager bzw. Wälzlager erforderlich. Auf solche Lager zurückgreifenden Sensormodule werden dadurch sehr groß und machen einen unauffälligen Einbau schwer möglich. Es ist daher Aufgabe der vorliegenden Erfindung, die genannten Nachteile zu lindern. Diese Aufgabe wird gelöst durch die Merkmale des unabhängigen Anspruchs.

Aus GB 1 604 861 sind Vorschläge zur Gestaltung von Lagern bekannt, die Sensiermittel für die Erfassung einer Bewegung oder Position aufweisen. Aus DE 204 4211 ist ein impulsgeber bekannt, der in einem Stator eines Gleitlagers angeordnet ist.

### Vorteile der Erfindung

Es ist nun vorgesehen, dass ein Impulsgeber mit dem Läufer eines Gleitlagers verbunden ist. Durch die Integration des Impulsgebers unmittelbar mit dem Läufer des Gleitlagers lässt sich eine besonders kompakte Bauweise erreichen, welche von den Abmessungen her auch versteckt oder bei Bedarf als Designteil eingesetzt werden kann. Weiterhin lässt sich dieses integrierte Bauteil, bestehend aus dem Impulsgeber mit vebundenem Rotor des Gleitlagers, sehr einfach fertigen, wenn erfindungsgemäß der Läufer des Gleitlagers aus Kunststoff besteht und im Spritzgießverfahren hergestellt wird. So kann beispielsweise der Impulsgeber in ein formgebendes Werkzeug eingelegt werden, welches anschließend beim Füllen des Werkzeuges mit Kunststoffschmelze formschlüssig mit dem Kunststoff verbunden wird. Bei diesem Herstellprozess lässt sich zudem auch das Gleitlager aus Kunststoff mit ausbilden, so dass ein besonders kompaktes Bauteil entsteht. Die Anzahl der erforderlichen Bauteile sowie die Montageschritte für ein Sensormodul reduzieren sich deutlich.

Erfindungsgemäß ist vorgesehen, dass der Läufer des Gleitlagers aus Kunststoff ausgebildet ist, während der Impulsgeber aus einem metallischen Material besteht. Die Verwendung von Kunststoff als Herstellmaterial für ein Gleitlager ist wartungsfrei. Zudem kann dann auf einen metallischen Impulsgeber zurückgegriffen werden, der beispielsweise ein von einem Sensor bereitgestelltes Magnetfeld abhängig von der Drehzahl beeinflusst, zur Ermittlung der Drehzahl.

In einer zweckmäßigen Weiterbildung ist vorgesehen, dass der Impulsgeber als Ring oder Reif ausgebildet ist, in dem zumindest eine Aussparung vorgesehen ist. Diese Aussparung kann aus dem Ring bzw. Reif ausgestanzt werden und ist somit kostengünstig herstellbar.

Weitere zweckmäßigen Weiterbildungen ergeben sich aus weiteren abhängigen Ansprüchen und aus der Beschreibung.

### Zeichnung

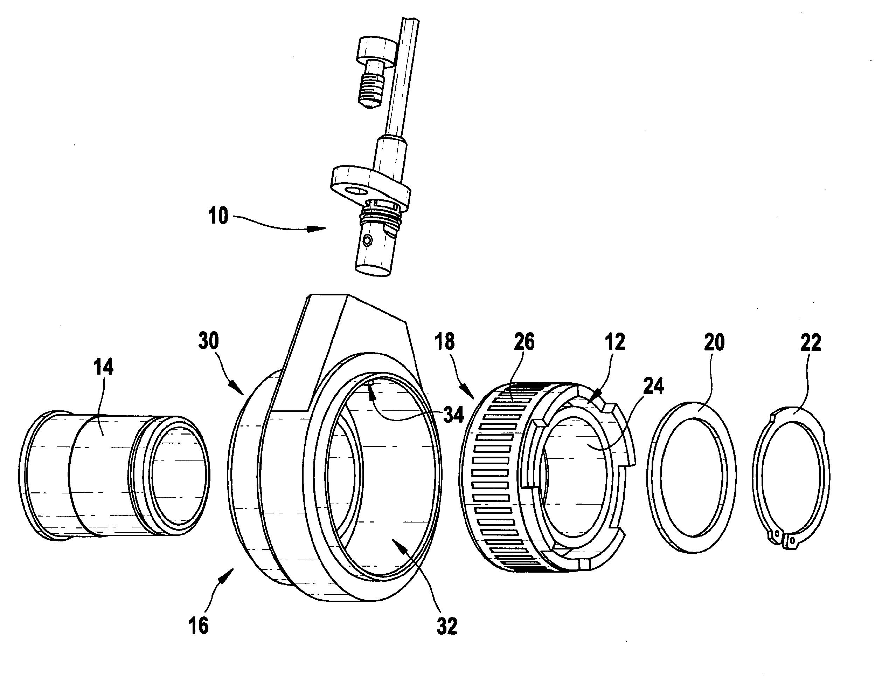

Ein Ausführungsbeispiel der Sensorvorrichtung ist in der Zeichnung dargestellt und wird nachfolgend näher beschrieben.

Es zeigt die Figur den Aufbau der Sensorvorrichtung in perspektivischer Darstellung.

Ein im wesentlichen zylinderförmiges Sensormodul 16 weist eine erste Öffnung 30 und eine zweite Öffnung 32 auf, wobei der Durchmesser der ersten Öffnung 30 geringer ist als der der zweiten Öffnung 32. Die erste Öffnung 30 dient der Aufnahme eines Gegenstücks 14, das als Buchse ausgeführt ist als feststehender Teil des Gleitlagers gegenüber einem beweglichen Läufer 12. Das Gegenstück 14 ist nach Montage in der ersten Öffnung 30 feststehend mit dem Sensormodul 16 verbunden. Über die zweite Öffnung 32 wird der Läufer 12, der vorzugsweise ringförmig ausgebildet ist, mit integriertem Impulsgeber 26 auf das Gegenstück 14 aufgeschoben. Der Impulsgeber 18 weist eine Reifform aus, welche in regelmäßigen Abständen achsial orientierte Aussparungen 26 aufweist. Der Impulsgeber 18 befindet sich an der Außenseite des Läufers 12. Der Läufer 12 besitzt eine zylinderförmige Struktur. An der Stirnseite des Läufers 12 wird ein Dichtungselement 20 aufgebracht, beispielsweise ein Dichtring. Weiterhin ist ein Befestigungselement 22 vorgesehen, welches ebenfalls ringförmig ausgeführt ist und mit im Läufer 12 integrierten Ausnehmungen zusammenwirkt. In dem Sensormodul 16 ist zudem eine Ausnehmung 34 vorgesehen, die in radialer Richtung orientiert ist. In diese Ausnehmung 34 lässt sich ein Sensor 10 einschieben, welcher beispielsweise mit einer Schraubbefestigung versehen sein kann zur Verbindung mit dem Sensormodul 16.

Der Läufer 12 wird mit einer Welle verbunden, deren Drehzahl oder sonstige interessierende Größe ermittelt werden soll. Insbesondere eignet sich die beschriebene Sensorvorrichtung zur Messungen von Drehbewegungen eines Lagers, vorzugsweise von Motorrädern. In bekannter Art und Weise wird die Drehzahl der rotierenden Welle erfasst. So beeinflusst beispielsweise der Impulsgeber 18 ein Magnetfeld, wobei diese Änderung durch den Sensor 10 ermittelt wird. Die Änderung des Magnetfelds gibt bei bekannter Geometrie des Impulsgebers 18 Rückschlüsse über die Drehzahl, mit der der Läufer 12 mit integriertem Impulsgeber 18 gegenüber dem Sensor 10 rotiert.

Um die Bauweise der Sensorvorrichtung möglichst kompakt zu halten, wird der Impulsgeber 18 durch ein Gleitlager, bestehend aus Läufer 12 und Gegenstück 14 gelagert. Der Läufer 12 besteht hierbei aus Kunststoff, in welchen der Impulsgeber 18 eingebettet ist. Auch das Gegenstück 14 kann aus Kunststoff oder aber auch aus Metall bestehen. Wesentlich ist insbesondere die Wahl des Läufers 12 als Kunststoffteil, um zum einen den Verschleiß zu reduzieren. Zum anderen kann dann jedoch der mit dem Läufer 12 integrierte Impulsgeber 18 als Metallteil ausgeführt sein zur gezielten Beeinflussung des Magnetfelds. Der Impulsgeber 18 ist beispielsweise ringförmig oder reifförmig ausgeführt. Zur Beeinflussung des Magnetfelds sind Ausnehmungen 26 in Umfangsrichtung vorgesehen. Der Impulsgeber 18 kann sehr einfach als Stanzteil hergestellt werden.

Das beschriebene Gleitlager mit integriertem Impulsgeber 18 lässt sich vorzugsweise in einem kunststoffformgebenden Verfahren, beispielsweise Spritzgießen, herstellen. Der Impulsgeber 18, der vorzugsweise als Metallreif mit Ausstanzungen 26 ausgeführt ist, wird in das formgebende Werkzeug eingelegt. Anschließend wird er Impulsgeber beim Füllen des Werkzeugs mit Kunststoffschmelze formschlüssig mit dem Kunststoff des Läufers 12 verbunden. In diesem Herstellungsprozess wird auch gleichzeitig das Gleitlager aus Kunststoff mit ausgebildet, so dass ein kompaktes Bauteil entsteht.

Das Sensormodul 16 dient nun einerseits der Aufnahme des Gegenstücks 14. Das Gegenstück 14 wird in die erste Öffnung 30 eingeführt und somit mit dem Sensormodul 16 fest verbunden. Weiterhin weist das Sensormodul 16 die Ausnehmung 34 auf, in welche der Sensor 10 eingeführt und mit dem Sensormodul 16 befestigt wird. Von der anderen Seite her wird über die zweite Öffnung 32 der Läufer 12 auf das Gegenstück 14 aufgesetzt.

Durch die beschriebene Vorrichtung lässt sich ein wartungsfreies Gleitlager einfach herstellen, indem der Impulsgeber 18 in Form eines Reifs bei der Herstellung dirket in einem Arbeitsgang mit eingebettet wird. Eine solche Vorrichtung baut sehr kompakt, so dass eine versteckte Anordnung oder bei Bedarf die Ausführung als Designteil möglich wird.

## Patentansprüche

1. Sensorvorrichtung zur Messung von Drehbewegungen, umfassend
- zumindest ein Gleitlager, bestehend aus zumindest einem Läufer (12) und zumindest einem Gegenstück (14), auf dem der Läufer (12) gleitend gelagert ist,
- zumindest einen Sensor (10) zur Erfassung einer Drehbewegung,
- zumindest einen impulsgeber (18), der mit dem gegenüber dem impulsgeber (18) feststehenden Sensor (10) zur Erfassung einer Drehbewegung, zusammenwirkt, wobei der Impulsgeber (18) mit dem Läufer (12) des Gleitlagers verbunden ist, **dadurch gekennzeichnet, dass** der Läufer (12) aus Kunststoff besteht und dass der impulsgeber (18) in den Kunststoff eingebettet ist.

2. Vorrichtung nach Anspruch 1, **dadurch gekennzeichnet, dass** der impulsgeber (18) als Ring oder Reif ausgebildet ist.

3. Vorrichtung nach einem der vorhergehenden Ansprüche, **dadurch gekennzeichnet, dass** der Impulsgeber (18) aus Metall besteht.

4. Vorrichtung nach einem der vorhergehenden Ansprüche, **dadurch gekennzeichnet, dass** der Impulsgeber (18) zumindest eine Aussparung (26) aufweist.

5. Vorrichtung nach einem der vorhergehenden Ansprüche, **dadurch gekennzeichnet, dass** der Läufer (12) durch Umspritzen des impulsgebers (18) hergestellt ist.

6. Vorrichtung nach einem der vorhergehenden Ansprüche, **dadurch gekennzeichnet, dass** ein Sensormodul (16) zur Aufnahme des Sensors (10) und/oder des Gegenstücks (14) vorgesehen ist.

7. Vorrichtung nach einem der vorhergehenden Ansprüche, **dadurch gekennzeichnet, dass** zumindest ein Dichtungsmittel (20) vorgesehen ist zur Abdichtung des Gleitlagers.

8. Vorrichtung nach einem der vorhergehenden Ansprüche, **dadurch gekennzeichnet, dass** zumindest ein Befestigungsmittel (22) vorgesehen ist zur Befestigung des Läufers (12) mit einem bewegten Teil.

9. Vorrichtung nach einem der vorhergehenden Ansprüche, **dadurch gekennzeichnet, dass** der Läufer (12) mit einer Achse eines Fahrzeugs, vorzugsweise eines Motorrads, verbunden ist.

## Claims

1. Sensor apparatus for measuring rotational movements, comprising
- at least one sliding bearing consisting of at least one runner (12) and at least one mating piece (14) on which the runner (12) is mounted in a sliding manner,
- at least one sensor (10) for detecting a rotational movement,
- at least one pulse generator (18) which interacts with the sensor (10), which is stationary in relation to the pulse generator (18), for detecting a rotational movement, with the pulse generator (18) being connected to the runner (12) of the sliding bearing, **characterized in that** the runner (12) is composed of plastic, and **in that** the pulse generator (18) is embedded in the plastic.

2. Apparatus according to Claim 1, **characterized in that** the pulse generator (18) is in the form of a ring or collar.

3. Apparatus according to either of the preceding claims, **characterized in that** the pulse generator (18) is composed of metal.

4. Apparatus according to one of the preceding claims, **characterized in that** the pulse generator (18) has at least one cutout (26).

5. Apparatus according to one of the preceding claims, **characterized in that** the runner (12) is produced by injection-moulded encapsulation of the pulse generator (18).

6. Apparatus according to one of the preceding claims, **characterized in that** a sensor module (16) is provided for accommodating the sensor (10) and/or the mating piece (14).

7. Apparatus according to one of the preceding claims, **characterized in that** at least one sealing means (20) is provided for sealing off the sliding bearing.

8. Apparatus according to one of the preceding claims, **characterized in that** at least one attachment means (22) is provided for attaching the runner (12) to a moving part.

9. Apparatus according to one of the preceding claims, **characterized in that** the runner (12) is connected to an axle of a vehicle, preferably of a motorcycle.

## Revendications

1. Dispositif de capteur pour mesurer des mouvements de rotation, comprenant
- au moins un palier lisse, constitué d'au moins un rotor (12) et d'au moins une pièce conjuguée (14) sur laquelle le rotor (12) est monté de manière à pouvoir glisser,
- au moins un capteur (10) pour détecter un mouvement de rotation,
- au moins un générateur d'impulsions (18) qui coopère avec le capteur (10) fixe par rapport au générateur d'impulsions (18) pour détecter un mouvement de rotation, le générateur d'impulsions (18) étant connecté au rotor (12) du palier lisse, **caractérisé en ce que** le rotor (12) se compose de plastique et **en ce que** le générateur d'impulsions (18) est noyé dans le plastique.

2. Dispositif selon la revendication 1, **caractérisé en ce que** le générateur d'impulsions (18) est réalisé sous forme de bague ou d'anneau.

3. Dispositif selon l'une quelconque des revendications précédentes, **caractérisé en ce que** le générateur d'impulsions (18) se compose de métal.

4. Dispositif selon l'une quelconque des revendications précédentes, **caractérisé en ce que** le générateur d'impulsions (18) présente au moins un évidement (26).

5. Dispositif selon l'une quelconque des revendications précédentes, **caractérisé en ce que** le rotor (12) est fabriqué par surmoulage du générateur d'impulsions (18).

6. Dispositif selon l'une quelconque des revendications précédentes, **caractérisé en ce qu'**un module de capteur (16) est prévu pour recevoir le capteur (10) et/ou la pièce conjuguée (14).

7. Dispositif selon l'une quelconque des revendications précédentes, **caractérisé en ce qu'**au moins un moyen d'étanchéité (20) est prévu pour étancher le palier lisse.

8. Dispositif selon l'une quelconque des revendications précédentes, **caractérisé en ce qu'**au moins un moyen de fixation (22) est prévu pour la fixation du rotor (12) à une partie déplacée.

9. Dispositif selon l'une quelconque des revendications précédentes, **caractérisé en ce que** le rotor (12) est connecté à un essieu d'un véhicule, de préférence d'une motocyclette.
